# EUROPEAN PATENT APPLICATION

(11) **EP 0 764 685 A2**
(43) Date of publication of application: **26.03.1997**
(21) Application number: 96306790.5
(22) Date of filing: 18.09.1996
(51) Int. Cl.: C08K 5/32, C08L 1/00

(54) **Polymer solutions**

(30) Priority: 22.09.1995 GB 9519437
(71) Applicant: COURTAULDS FIBRES (HOLDINGS) LIMITED, London W1A 2BB (GB)
(72) Inventor: Urben, Peter George, Kenilworth, Warwickshire CV9 2PA (GB)
(74) Representative: Hale, Stephen Geoffrey

(57) **Abstract**

A method of making a solution of a polysaccharide, particularly cellulose, in an aqueous tertiary amine N-oxide solvent which exhibits good thermal stability is disclosed. The solution contains at least one compound selected from the group consisting of compounds of the formula ArCR¹=NNR²R³, where Ar represents an aromatic group which comprises an aromatic ring having six pi-electrons and substituted by a hydroxy group in the ortho position, optionally further substituted on the aromatic ring; R¹ represents hydrogen or C₁-C₄ n-alkyl; R² represents hydrogen, C₁-C₄ alkyl or C₆-C₁₀ aryl; and R³ represents hydrogen, C₁-C₄ alkyl, C₆-C₁₀ aryl or R⁴CO, where R⁴ represents hydrogen, C₁-C₄ alkyl, C₆-C₁₀ aryl, XCONR²NH₂ or XCONR²N=CR¹Ar, where X represents a chemical bond, a C₁-C₄ alkylene or C₂-C₄ alkylidene group or a C₆-C₁₀ arylene group; or R² and R³ together represent ArCR¹; and of one or more precursors of such compounds; and of compounds of the formula R⁵CONR¹NH₂ wherein R⁵ represents hydrogen, C₁₋₄ alkyl, C₆₋₁₀ aryl or XCONR¹NH₂. When the groups R², R³ and R⁴ are alkyl or aryl groups, they may optionally be substituted alkyl or aryl groups. When the groups R², R³ and R⁴ are aryl groups, they may optionally be carbocyclic or heterocyclic aryl groups. The solutions are suited to being formed into extruded articles such as fibres and films.

## Description

This invention relates to the stabilisation against thermal decomposition of solutions of polysaccharides, in particular cellulose, in solvents which comprise a tertiary amine N-oxide and water. Such solutions are useful as spinning or casting dopes for the manufacture of shaped polymer articles such as fibres and films.

The manufacture of shaped polymer articles by extrusion of a solution of cellulose in an aqueous tertiary amine N-oxide solvent into an aqueous coagulating bath is described for example in US-A-4,246,221, the contents of which are incorporated herein by way of reference. Such a process may be referred to as a solvent-spinning process. Fibres and films produced by such a method may be referred to as solvent-spun cellulose fibres and films or generically as lyocell fibres and films.

Tertiary amine N-oxides (which may also be referred to for convenience as amine oxides) in hydrated form are susceptible to degradation, particularly at elevated temperatures and at certain lower levels of hydration, both of which conditions are conditions which favour the dissolution of organic polymers such as polysaccharides therein. Degradation results in a loss of amine oxide, which is an expensive solvent, and degradation can give rise to discolouration of the solvent and of any polymer dissolved in it. It is also known that amine oxides may undergo exothermic decomposition at elevated temperatures. It is further known that polysaccharides such as cellulose dissolved in an amine oxide solvent may degrade (suffer reduction in molecular weight) at elevated temperatures. The thermal degradation of solutions of cellulose in amine oxides and its inhibition by the addition of stabilising agents thereto is reviewed in WO-A-95/08010.

In general, the difficulty and expense of processing a polymer dope rise with increasing viscosity. Dope viscosity increases with increasing polymer concentration and molecular weight but decreases with increasing temperature. In the manufacture of elongate members such as fibres and films, it is often desirable to employ as high a polymer concentration in the dope as may be practicable having regard to the difficulty of handling viscous dopes, inter alia for economic reasons. It is further often desirable to utilise polymers of high molecular weight in order to produce fibres and films which have superior mechanical properties. Accordingly, it is often desirable to operate at elevated temperature in order to reduce dope viscosity, subject to limits imposed by technical constraints such as the thermal stability of the dope. It is an object of the present invention to provide solutions of polysaccharides in amine oxides which have improved thermal stability and which can accordingly be processed at high temperatures.

According to the invention there is provided a method for the manufacture of a solution of a polysaccharide in an aqueous tertiary amine N-oxide solvent, characterised in that it includes the step of dissolving in the solution or solvent at least one compound selected from the group consisting of (A) compounds of the formula ArCR¹=NNR²R³, where Ar represents an aromatic group which comprises an aromatic ring having six pi-electrons and substituted by a hydroxy group in the ortho position, optionally further substituted on the aromatic ring; R¹ represents hydrogen or C₁-C₄ n-alkyl; R² represents hydrogen, C₁-C₄ alkyl or C₆-C₁₀ aryl; and R³ represents hydrogen, C₁-C₄ alkyl, C₆-C₁₀ aryl or R⁴CO, where R⁴ represents hydrogen, C₁-C₄ alkyl, C₆-C₁₀ aryl, XCONR²NH₂ or XCONR²N=CR¹Ar, where X represents a chemical bond, a C₁-C₄ alkylene or C₂-C₄ alkylidene group or a C₆-C₁₀ arylene group; or R² and R³ together represent ArCR¹; (B) one or more precursors which are capable of reacting in the solution to form such a compound (A); and (C) compounds of the formula R⁵CONR¹NH₂ wherein R⁵ represents hydrogen, C₁₋₄ alkyl, C₆₋₁₀ aryl or XCONR¹NH₂ and R¹ has the above meaning. When the groups R², R³, R⁴ and R⁵ are alkyl or aryl groups, they may optionally be substituted alkyl or aryl groups. When the groups R², R³, R⁴ and R⁵ are aryl groups, they may optionally be carbocyclic or heterocyclic aryl groups. Mixtures of compounds may be used. Compounds of the formula ArCR¹=NNR²R³ are hereinafter on occasion referred to as the hydrazone stabilising agents of the invention. The invention also provides a solution of a polysaccharide which is the product of the foregoing method.

The solutions provided according to the invention exhibit enhanced stability against thermal degradation, both of the amine oxide solvent and of the polysaccharide.

The reaction of aldehydes or ketones of general formula RCOR and hydrazine derivatives of general formula RRNNH₂, wherein each R may be the same or different, is well-known. In many cases the initial product of this reaction is an addition product of general formula RRC(OH)NHNRR, such addition products being commonly called aminohydrins. In most cases the final product of this reaction is a condensation product of general formula RRC=NNRR, and such products are commonly called hydrazones. If hydrazine NH₂NH₂ is employed, condensation products of general formula RRC=NN=CRR can be obtained and such products are commonly called azines. Without wishing to be bound by any theory, it is thought that compounds containing the grouping Ar-C=N-N may be the active stabilising species in the solutions provided according to the invention.

The polysaccharide is preferably cellulose. A cellulose derivative, for example a cellulose ether, may also be used. Mixtures of polysaccharides may be used. The concentration of the polysaccharide in the solution is preferably in the range from 5 to 30, more preferably from 10 to 25, further preferably from 15 to 25, percent by weight.

The tertiary amine N-oxide may be any of those known as solvents for cellulose and other polysaccharides, as described for example in US-A-2,179,181 and GB-A-1,144,048, the contents of which are incorporated herein by way of reference. The latter specification describes cyclic tertiary amine N-oxides and these are the preferred solvents used in the present invention, particularly N-methylmorpholine N-oxide which combines effectiveness as a solvent with thermal stability. The solutions provided according to the invention may also contain one or more other miscible solvents and/or non-solvents for the polysaccharide in known manner.

The aromatic ring in the group Ar in the compounds (A) and (B) is often a six-membered ring, preferably a carbocyclic (benzene) ring. Alternatively, it may be a 6-membered heterocyclic ring such as pyridyl or a 5-membered heterocyclic ring such as thienyl. According to the strictest terminology, ortho-substitution means substitution on adjacent carbon atoms in a benzene ring. As used herein with reference to the group Ar, ortho-substitution means that the group Ar contains the moiety -C(OH)=C< in at least one of its conventional valence bond representations (i.e. not involving separation of charges), wherein one of the free bonds on the right-hand carbon atom represents the free bond in the group Ar. Preferred examples of the group Ar include 2-hydroxyphenyl (o-hydroxyphenyl), which is particularly preferred, and substituted variants thereof, such as 2,4-dihydroxyphenyl and particularly 2,3-dihydroxyphenyl. An example of a group Ar containing a six-membered heterocyclic aromatic ring is 3-hydroxy-4-pyridyl.

The group R¹ in the compounds (A), (B) and (C) is preferably methyl or hydrogen, further preferably hydrogen.

The group R² in the compounds (A) and (B) is preferably hydrogen. The group R³ in those compounds is preferably of the form R⁴CO. A preferred example of the group R⁴ is methyl. Another preferred example of the group R⁴ is XCONR²N=CR¹Ar, particularly where X represents a chemical bond and Ar, R¹ and R² are of the preferred forms set out hereinabove. Alternatively, R² and R³ together may represent ArCR¹, where Ar and R¹ are of the preferred forms set out hereinabove.

The concentration of the compound or compounds (A), (B) and/or (C) in a solution provided according to the invention is preferably in the range from 0.005 to 0.5, more preferably from 0.01 to 0.1, percent by weight.

The solutions provided according to the invention may additionally contain one or more other stabilising agents of known type. In particular, synergistic stabilisation may be observed when the hydrazone stabilising agents of the invention are used in combination with the known stabilising agents disclosed in EP-A-047,929, the contents of which are incorporated herein by way of reference. Such known stabilising agents include organic compounds comprising a C=C-C=C grouping which bears at least two groups selected from hydroxyl groups and amino groups containing at least one hydrogen atom, in particular polyphenols, more particularly gallic acid and its derivatives, notably propyl gallate.

Acyl hydrazides which may be used as compounds (C) in the solutions provided according to the invention possess a free NH₂ group. Examples of such hydrazides include the hydrazides of aliphatic mono- and di-acids such as acetyl hydrazide CH₃CONHNH₂ and particularly oxalyl dihydrazide (CONHNH₂)₂. It has been observed that such solutions exhibit enhanced stability against thermal degradation. The urea derivatives semicarbazide and thiosemicarbazide do not provide any stabilising effect and are not considered to be acyl hydrazides. Such solutions may additionally contain one or more other known stabilising agents such as those disclosed in EP-A-047,929, in particular propyl gallate, because synergistic stabilisation may be observed.

The polysaccharide has to be mixed with the aqueous amine oxide solvent to effect dissolution. It is advantageous if that initial solvent has a water content in excess of the level required to give the desired water content of the solution. The excess water promotes an even distribution of the polysaccharide and solvent, and in the case of woodpulp it promotes swelling of the cellulose fibres to aid dissolution. An even distribution is important because high local concentrations of polysaccharide can give rise to undesirable gel formation. Once a uniform dissolving process is under way, then the water content of the solvent may be reduced, for example by evaporation in a thin-film evaporator such as a Filmtruder (Trade Mark), to the desired value. A suitable initial water content of the solvent for use with woodpulp is in the range from 10 to 50 percent by weight.

In the manufacture of fibres and films, it is usually desirable to employ as high a polymer concentration in the spinning dope (solution) as is compatible with suitable spinning viscosities. By this criterion, amine oxides are most effective in the hydrated state as solvents for polysaccharides. The desired water content of the solution varies according to the particular amine oxide used and the particular polymer which it is used to dissolve. For cellulose, a suitable general range is from 1 to 30 percent by weight of water based on the weight of solvent, with a range of from 5 to 20 percent being preferred when the amine oxide is N-methylmorpholine N-oxide.

The method of the invention may be performed by dissolution of the compound or compound(s) (A) and/or (C) in the amine oxide solvent or in the polysaccharide solution. Alternatively, the solutions may be prepared by dissolution in the solvent or solution of one or more precursors of a compound (A) capable of reacting in the solution at operational temperatures to form such a hydrazone stabilising agent. In a first such embodiment are utilised at least one compound (aldehyde or ketone) (I) of formula ArCR¹O and at least one compound (hydrazide or hydrazine) (II) of formula NH₂NR²R³. In a second such embodiment are utilised at least one compound (hydrazone) (III) of formula ArCR¹NNH₂ and at least one compound (acylating agent) (IV) of formula R⁴COY, where Y represents a leaving group, in particular a C₁-C₄ alkyl group, often methyl or ethyl. In a third such embodiment is utilised an addition product of precursors (I) and (II). It is thought that such addition products are aminohydrins of the general formula ArC (OH) R¹NHNR²R³. It will readily be understood that the use of such precursors may offer advantages in simplicity of operation, in particular in that no separate synthesis and isolation of the hydrazone stabilising agents of the invention is required. If pairs of precursors (I) and (II) or (III) and (IV) are used, the equivalent ratio of the reactive groups in the respective precursors is preferably in the range 0.8:1 to 1.2:1.

Preferred examples of compound (I) include salicylaldehyde (Ar = 2-hydroxyphenyl, R¹ = H), 2,3-dihydroxybenzaldehyde (Ar = 2,3-dihydroxyphenyl, R¹ = H), 2,4-dihydroxybenzaldehyde (Ar = 2,4-dihydroxyphenyl, R¹ = H) and 2-hydroxyacetophenone (Ar = 2-hydroxyphenyl, R¹ = CH₃). An example of compound (I) containing a heterocyclic ring is pyridoxal (Ar = 2-methyl-3-hydroxy-5-hydroxymethyl-4-pyridyl, R¹ = H).

Preferred examples of compound (II) include those of general formula NH₂NHCOR⁴, particularly where R⁴ is methyl (acetyl hydrazides. Another preferred example of compound (II) is (CONHNH₂)₂ (oxalyl hydrazide).

A particularly preferred combination is that in which compound (I) is salicylaldehyde and compound (II) is acetyl hydrazide.

The compounds (A) and/or (C) and/or precursors (B) of compound (A) may be added separately or together as the neat substances or as dispersions or solutions thereof. Alternatively, the polysaccharide may be treated so as to contain such compounds and/or precursors prior to its introduction into the dissolution step.

According to the invention there is further provided a method for the manufacture of an extruded lyocell member which includes the steps of:
(1) dissolving a polysaccharide in an aqueous tertiary amine N-oxide solvent to form a solution;
(2) extruding the solution through a die by way of a gaseous gap into an aqueous coagulating bath to form a coagulated member;
(3) washing the coagulated member to remove residual tertiary amine N-oxide therefrom; and
(4) drying the coagulated member,
characterised in that to the solvent or solution is added at least one compound selected from the group consisting of (A) compounds of the formula ArCR¹NNR²R³; (B) a precursor or precursors which are capable of reacing in the solution to form such a compound (A); and (C) compounds of the formula R⁴CONR¹NH₂. The extruded member may be fibre or film. The gas in the gaseous gap is preferably air.

Desirably, the amine oxide is in large proportion recovered from the coagulation and washing baths and recycled into the dissolution step (1). The stabilising agent or its precursor or precursors may conveniently be added to and dissolved in such recycled amine oxide prior to its reintroduction into the dissolution step (1).

The solutions of the invention may be stored and transported at temperatures in the range of about 100 to about 140°C, often about 110 to about 130°C. It will be understood that the temperature of the solution may be varied during steps such as the dissolution, storage, transporting and extrusion steps mentioned hereinabove.

Some of the hydrazone stabilising agents of the invention are coloured, often yellow, in solution. This is thought to be due to anion formation. Solutions of polysaccharides such as cellulose in amine oxides are generally alkaline, with pH commonly in the range from 10 to 13. This yellow colour may persist into an extruded lyocell member made using the invention. In such a case, colour can be removed by acidification and/or especially by bleaching with aqueous hydrogen peroxide, as part of the washing step (which may be preferred) or after drying.

The effect of various additives and mixtures of additives on the thermal degradation of tertiary amine N-oxides was assessed by the following General Procedure, which was used in the subsequent Examples:-

### General Procedure

### 1. Basis of the Analysis

In general, the major primary thermal decomposition product of a tertiary amine N-oxide is the tertiary amine. For example, N-methylmorpholine N-oxide degrades to yield N-methylmorpholine. The following procedure provides a simple comparative method of assessing additives for their efficacy in retarding decomposition of an amine oxide against thermal degradation by assessment of the rate of tertiary amine formation.

### 2. Formation of Hydrazones

This was generally performed by stirring together in methanol solution stoichiometric quantities of an aldehyde or ketone and a hydrazine derivative. Acetyl hydrazide is very soluble in methanol, and reaction was found to occur almost instantly. Oxalyl dihydrazide is relatively insoluble in methanol, and with this compound it was found desirable to add a small amount of acetic acid catalyst and to heat for some hours in order to effect reaction. The reaction products in general crystallised readily from the solution and were collected by filtration, washing with methanol and drying.

Reactions utilising oxalyl dihydrazide sometimes gave 100% recovery based on the weight of the starting materials, suggestive of aminohydrin formation. More severe drying resulted in the weight loss appropriate for dehydration to the hydrazone.

### 3. Dope Preparation

N-methylmorpholine N-oxide (NMMO) (13.0-13.5 g of a recycled mixture containing 60% by weight NMMO and the balance water) and the additive to be tested were warmed in a glass beaker at ca. 80°C for about an hour to effect dissolution of at least a major proportion of the additive.

Dissolving-grade woodpulp (1.0 g) was then charged into the beaker, which was set aside to stand for about 30 minutes to equilibrate. The beaker was next placed in a vacuum oven (pressure ca. 0.5 bar) at 95°C for about 4 hours, with removal for stirring every hour, until the cellulose had almost entirely dissolved, to give a solution (dope) nominally containing 10% by weight cellulose. Additive concentrations are reported as their nominal values in the dope.

Although not all solutions will have contained identical amounts of the major components, in general all the samples used in a particular series of experiments were prepared at the same time and any differences in composition are not considered to have had any significant effect on the results.

Different batches of NMMO were used in different experiments, and this was shown to give rise to differences in the results obtained on control samples. Such differences are not thought to have any significant effect on the results within any particular series of experiments.

### 4. Pyrolysis

Portions of dope (ca. 1.5 g) were placed in glass screw-top vials (10 ml capacity) and the tops were screwed down tightly. The vials were then heated (pyrolysed) in an oven, generally maintained at a nominal 130°C,for a specified number of hours. Preliminary experiments had shown that some degradation was observable at temperatures of 120°C and above.

At the end of the specified period, the vials were removed from the oven and allowed to cool for 3-4 minutes. The vials were usually laid on their side; the degree of dope flow inside the vial gave some indication as to whether any significant reduction in viscosity, presumably due to cellulose degradation, had occurred.

### 5. Preparation for Analysis

The vials were opened and charged with deionised water (three times the weight of the dope portion, or in less exact work 4.5 ml). The dope was lightly stirred (if stirrable) or scraped from the sides and bottom of the vial (if not stirrable), and the vial was left to equilibrate for 48 hours with occasional shaking. Preliminary experiments had shown that equilibration was complete after 36 hours.

An aliquot of the aqueous layer (1.0 g) was weighed into a smaller vial (2 ml). To the aliquot was added two or three drops of 25-30% aqueous NaOH solution to ensure that N-methylmorpholine in the sample was present as free base rather than as amine salt. To the aliquot was next added dichloromethane (0.2 ml) . The mixture was vigorously shaken for a minute or two and then allowed to settle. Control experiments showed that this procedure extracted almost all the N-methylmorpholine present into the organic (dichloromethane) layer. The purpose of the extraction was to separate N-methylmorpholine from the bulk of the NMMO, which would otherwise crack to produce more N-methylmorpholine during subsequent analysis by gas chromatography.

### 6. Gas Chromatography

The organic layer was analysed by gas chromatography (gc). Care was taken to avoid contamination of the gc samples by the aqueous layer, as this was found to give erroneous results. The analysis was carried out on a 2 m x 4 mm gc column containing 3% OV 225 on Chromosorb WP (Trade Mark) at 70°C with nitrogen as carrier gas (flow ca. 50 ml/min). The injection temperature was 200°C; higher injection temperatures were found to induce cracking of traces of NMMO present in the sample, thereby giving erroneous results. Detector temperature (flame ionisation) was 300°C.

Several injections of each sample are desirable, although reproducibility is good under stable conditions. Retention times were of the order of 0.5 min for dichloromethane, a little over 1.0 min for N-methylmorpholine, and 1.5 min for any tail indicating water contamination. The response is sensitive to flame conditions; in general, a hydrogen-rich flame gives larger relative values for N-methylmorpholine and is to be preferred. The concentration of N-methylmorpholine in the organic layer was assessed by integration of the area under the peak and is expressed in the results which follow as an arbitrary number (proportional to concentration). A simple calibration experiment suggested that the percentage of NMMO degraded during pyrolysis corresponded to about one quarter of the arbitrary number.

Experience has shown that the confidence limits of measured gc results of 0.5 or less are wide, that a difference of 0.3 or more between two measured gc results of around 2 can be considered meaningful and that in general the accuracy of the measurements increases as the concentration increases.

After each series of samples, the gc apparatus was cleaned by raising injector temperature to 300°C and column temperature to 250°C for about 20 minutes.

The invention is illustrated by the following Examples, in which parts, percentages and proportions are by weight unless otherwise specified. In general, stabilisers were compared against the known effective stabiliser propyl gallate (PG). The gc results quoted are averages, accompanied by the numbers of replicate results in parentheses. A dash in the Tables indicates that no measurement was made. The reference codes of comparative experiments, not according to the invention, end with the letter 'x'.

### Example 1

Samples were pyrolysed in an oven without air circulation at 130-135°C and analysed according to the General Procedure for the times indicated and with the results shown in Table 1:

**Table 1**

| Reference | PG % | Additive (%) | 3 hours | 7 hours |
|---|---|---|---|---|
| Ax | - | - | 8.6 (2) | 11.7 (4) |
| Bx | 0.1 | - | 2.2 (3) | 8.1 (2) |
| C(a) | 0.1 | OH (0.2) | 1.4 (2) | 3.4 (2) |
| C(b) | 0.1 | OH (0.2) | 1.1 (2) | - |
| D | - | DHB+OH (0.25+0.1) | 3.6 (2) | 8.5 (2) |
| OH = oxalyl dihydrazide. DHB = 2,3-dihydroxybenzaldehyde. C(a) and C(b) were separate experiments. | | | | |

C(a) and (b) gassed, both during making-up and during the first 2-3 hours of pyrolysis. They were of very pale colour for more than 3 hours. D was orange in colour and became more highly coloured during pyrolysis. It is thought that this may have been a consequence of the relatively high concentrations of stabilising agent used in this experiment.

### Example 2

Samples were pyrolysed in an oven without air circulation at 130°C and analysed according to the General Procedure for the times indicated and with the results shown in Table 2:

**Table 2**

| Reference | PG % | Additive (%) | 1.5 hr | 3.3 hr | 6 hr |
|---|---|---|---|---|---|
| Ax | - | - | 2.5 (2) | 8.3 (3) | 21.8 (3) |
| Bx | 0.1 | - | - | 3.8 (2) | 11.0 (2) |
| C | - | OH (0.05) | 1.3 (2) | 6.3 (2) | 13.3 (2) |
| D | 0.1 | OH (0.05) | - | 2.0 (2) | 5.9 (2) |
| OH = oxalyl dihydrazide. | | | | | |

Samples C and D gassed less than the corresponding samples in Example 1, which contained higher concentrations of hydrazide. They were noticeably pale in colour for at least 2 hours. There was no indication that the presence of hydrazide affected the rate of viscosity change. The results suggest that PG and OH were acting as stabilisers independently of each other.

### Example 3

Samples were pyrolysed in an oven without air circulation at 130°C and analysed according to the General Procedure for the times indicated and with the results shown in Tables 3A and 3B (separate pyrolyses):

**Table 3A**

| Reference | PG % | Additive (%) | 3 hours | 6 hours |
|---|---|---|---|---|
| Ax | - | - | 2.9 (2) | 6.0 (2) |
| Bx | 0.1 | - | 1.0 (2) | - |
| Cx | - | DD (0.2) | 2.5 (2) | 5.5 (2) |
| Dx | 0.1 | DD (0.2) | 0.7 (2) | - |

**Table 3B**

| Reference | PG % | Additive (%) | 3 hours | 5 hours | 6 hours |
|---|---|---|---|---|---|
| Ex | - | - | 2.3 (2) | 6.8 (2) | - |
| Fx | 0.1 | - | - | - | 4.0 (2) |
| Gx | 0.1 | DD (0.2) | - | - | 2.8 (2) |
| Hx | - | DECH (0.2) | 2.3 (2) | 6.3 (2) | - |
| Ix | - | DHP (0.2) | 2.1 (2) | 6.4 (2) | - |

DD = n-dodecanethiol. DECH = diethoxycarbonyl hydrazide ( (C₂H₅OCONH)₂) . DHP = 3,6-dihydroxypyridazine.

The thiol and the two hydrazides without NH₂ groups appeared to have no stabilising effect.

### Example 4

Samples were pyrolysed in an oven without air circulation at 130-135°C and analysed according to the General Procedure for the times indicated and with the results shown in Table 4:

**Table 4**

| Reference | PG % | Additive (%) | 2.5 hours | 5 hours |
|---|---|---|---|---|
| Ax | - | - | 1.1 (2) | 4.5 (2) |
| B | - | DOH (0.1) | 0.7 (3) | 2.1 (2) |
| Cx | - | SC (0.2) | 2.0 (2) | 6.9 (2) |
| Dx | - | TSC (0.2) | 3.0 (2) | 8.0 (2) |
| E | - | OH (0.1) | 1.7 (2) | 3.4 (2) |

DOH = 2,3-dihydroxybenzaldehyde oxalyldihydrazone (the 1:2 hydrazone of the aldehyde and oxalyl dihydrazide). SC = semicarbazide (+ trace NaOH). TSC = thiosemicarbazide. OH = oxalyl dihydrazide.

Sample B was initially yellow-orange in colour; but gassed little if at all, was the palest sample after 5 hours and exhibited very good viscosity retention. Samples Cx and Dx gassed vigorously and coloured rapidly. Viscosity reduction was accelerated in Dx. Sample E gassed but exhibited good colour and initial retention of viscosity.

### Example 5

Samples were pyrolysed in an oven without air circulation at 130°C and analysed according to the General Procedure for the times indicated and with the results shown in Table 5:

**Table 5**

| Reference | PG % | Additive (%) | 2 hours | 3 hours | 4 hours |
|---|---|---|---|---|---|
| Ax | - | - | - | - | 6.3 (2) |
| Bx | 0.05 | - | 0.6 (2) | 1.3 (2) | 2.5 (2) |
| C | - | SOH (0.02) | 0.6 (2) | 2.0 (2) | 3.6 (2) |
| D | 0.05 | SOH (0.02) | 0.5 (2) | - | 1.7 (2) |
| Ex | 0.05 | BOH (0.02) | 0.6 (2) | 1.4 (2) | 2.0 (2) |
| F | - | DOH (0.01) | 1.0 (2) | - | 2.5 (2) |

SOH = 1:2 adduct of salicylaldehyde and oxalyl dihydrazide. BOH = benzaldehyde oxalyldihydrazone. DOH = 1:2 adduct of 2,3-dihydroxybenzaldehyde and oxalyl dihydrazide.

The 3-hour measurements were taken from a pyrolysis different from the 2- and 4-hour measurements. The stabilisation provided by SOH and DOH was comparable to that provided by PG.

### Example 6

Samples were pyrolysed in an oven without air circulation at 130°C and analysed according to the General Procedure for the times indicated and with the results shown in Table 6:

**Table 6**

| Reference | PG % | Additive (%) | 2.5 hours | 4 hours |
|---|---|---|---|---|
| Ax | - | - | 4.2 (2) | 4.0 (2) |
| Bx | 0.05 | - | 1.0 (2) | 2.9 (2) |
| C | - | SH (0.02) | 2.8 (2) | 4.3 (2) |
| D | 0.05 | SA+OH(0.05+0.02) | 0.9 (2) | 1.4 (2) |
| E | - | SOH (0.02) | 2.2 (2) | - |
| F | 0.05 | SOH (0.02) | - | 2.2 (2) |

SH = salicylaldehyde hydrazone. SA = salicylaldehyde. OH = oxalyl dihydrazide. SOH = 1:2 adduct of salicylaldehyde and oxalyl dihydrazide.
The results on sample Ax appear anomalous. SH, which is known as a strong chelator of metal cations, appeared to be ineffective.

### Example 7

Samples were pyrolysed in a fan oven at 120°C and analysed according to the General Procedure for the times indicated and with the results shown in Table 7:

**Table 7**

| Reference | PG % | Additive (%) | 15 hours |
|---|---|---|---|
| Ax | - | - | 6.10 (2) |
| Bx | 0.05 | - | 2.76 (2) |
| Cx | - | SED (0.03) | 7.90 (2) |
| D | - | SOH (0.03) | 3.69 (3) |
| E | - | OVOH (0.03) | 3.36 (3) |
| Fx | - | IVOH (0.03) | 6.28 (2) |
| G | - | DOH1 (0.03) | 3.17 (2) |
| H | - | DOH2 (0.03) | 3.25 (2) |
| I | - | DOH (0.03) | 3.07 (4) |

SED = N,N'-bis(salicylidene)ethylenediamine, SOH = salicylaldehyde oxalyldihydrazone. OVOH = orthovanillin (2-hydroxy-3-methoxybenzaldehyde) oxalyldihydrazone. IVOH = isovanillin (3-hydroxy-4-methoxybenzaldehyde) oxalyldihydrazone. DOH1 and DOH2 = 1:2 adduct of 2,3-dihydroxybenzaldehyde and oxalyl dihydrazide (different samples). Adducts DOH1 and DOH2 were obtained in 100% weight yield based on the starting materials and are thought to have been the aminohydrin. DOH = 2,3-dihydroxybenzaldehyde oxalyldihydrazone. DOH was produced by heating adduct DOH2 to constant weight; loss in weight was 15%, corresponding to dehydration to the hydrazone.

SED (which is known strongly to chelate metal cations) and IVOH provided no stabilising effect. DOH was of similar effectiveness to DOH1 and DOH2.

### Example 8

Samples were pyrolysed in a fan oven at 130°C and analysed according to the General Procedure for the times indicated and with the results shown in Table 8:

**Table 8**

| Reference | PG % | Additive (%) | 1.5 hours | 2.5 hours |
|---|---|---|---|---|
| A | - | OVOH (0.03) | 0.44 (1) | 0.91 (2) |
| Bx | - | IVOH (0.03) | 1.01 (1) | 2.17 (2) |
| Cx | - | VOH (0.03) | 1.09 (1) | 1.99 (2) |
| D | - | SAZ (0.03) | 0.64 (1) | 1.54 (2) |
| Ex | - | SGZ (0.03) | 1.06 (1) | 2.27 (2) |

OVOH = orthovanillin oxalyldihydrazone. IVOH = isovanillin oxalyldihydrazone. VOH = vanillin (4-hydroxy-3-methoxybenzaldehyde) oxalyldihydrazone. SAZ = salicylaldehyde azine. SGZ = 1:2 crossed azine of salicylaldehyde and glyoxal.

Pyrolysis times in this experiment are uncertain, due to problems with the oven in the middle of the experiment. IVOH, VOH and SGZ were relatively ineffective as stabilisers.

### Example 9

Samples were pyrolysed in a fan oven at 123°C and analysed according to the General Procedure for the times indicated and with the results shown in Table 9:

**Table 9**

| Reference | PG % | Additive (%) | 4.5 hours |
|---|---|---|---|
| Ax | 0.05 | - | 0.75 (3) |
| B | - | SOH (0.03) | 0.78 (3) |
| C | - | DOH (0.03) | 0.65 (3) |
| D | - | SAZ (0.03) | 1.42 (2) |

SOH = salicylaldehyde oxalyldihydrazone. DOH = 2,3-dihydroxybenzaldehyde oxalyldihydrazone. SAZ = salicylaldehyde azine.

### Example 10

Samples were pyrolysed in a fan oven at 130°C and analysed according to the General Procedure for the times indicated and with the results shown in Table 10:

**Table 10**

| Reference | PG % | Additive (%) | 3 hours |
|---|---|---|---|
| Ax | 0.06 | - | 1.30 (4) |
| B | 0.06 | OVOH (0.03) | 0.91 (4) |
| Cx | 0.06 | IVOH (0.03) | 1.22 (5) |
| Dx | 0.06 | VOH (0.03) | 1.11 (4) |

OVOH = orthovanillin oxalyldihydrazone. IVOH = isovanillin oxalyldihydrazone. VOH = vanillin oxalyldihydrazone.

After the experiment, sample B was notably paler and more viscous than the other samples. Sample B exhibited greater stabilisation than Ax.

### Example 11

Samples were pyrolysed in a fan oven at 112°C and analysed according to the General Procedure for the times indicated and with the results shown in Table 11:

**Table 11**

| Reference | PG % | Additive (%) | 19 hours |
|---|---|---|---|
| Ax | - | - | 2.26 (1) |
| Bx | 0.06 | - | 1.38 (2) |
| C | - | SOH (0.03) | 1.37 (2) |
| D | - | DOH (0.03) | 1.02 (2) |
| Ex | - | VOH (0.03) | 2.53 (1) |
| F | 0.06 | OVOH (0.03) | 0.84 (2) |
| G | - | SAZ (0.03) | 1.91 (1) |

SOH = salicylaldehyde oxalyldihydrazone. DOH = 2,3-dihydroxybenzaldehyde oxalyldihydrazone. VOH = vanillin oxalyldihydrazone. OVOH = orthovanillin oxalyldihydrazone. SAZ = salicylaldehyde azine.

At this lower temperature, SOH appeared to have improved performance relative to PG.

### Example 12

Samples were pyrolysed in a fan oven at 130°C and analysed according to the General Procedure for the times indicated and with the results shown in Table 12:

**Table 12**

| Reference | PG % | Additive (%) | 3 hours |
|---|---|---|---|
| Ax | - | - | 1.63 (2) |
| B | - | DOH (0.03) | 0.69 (3) |
| Cx | - | SAO (0.03) | 1.99 (3) |
| D | - | HOH (0.03) | 1.02 (3) |
| E | - | SSH (0.03) | 0.68 (3) |
| F | - | SAH (0.03) | 0.47 (2) |

DOH = 1:2 adduct of 2,3-dihydroxybenzaldehyde and oxalyl dihydrazide. SAO = salicylaldoxime. HOH = reaction product of 2-hydroxyacetophenone and oxalyl dihydrazide (chemistry doubtful). SSH = salicylaldehyde salicylhydrazone. SAH = salicylaldehyde acetylhydrazone.

### Example 13

Samples were pyrolysed in a fan oven at 113°C and analysed according to the General Procedure for the times indicated and with the results shown in Table 13:

**Table 13**

| Reference | PG % | Additive (%) | 19 hours |
|---|---|---|---|
| Ax | 0.06 | IVOH (0.03) | 2.18 (2) |
| B | - | HOH (0.03) | 2.09 (2) |
| C | - | SSH (0.03) | 1.59 (2) |
| D | - | SAH (0.03) | 1.21 (3) |

IVOH = isovanillin oxalyldihydrazone. HOH = adduct of 2-hydroxyacetophenone and oxalyl dihydrazide (stoichiometry doubtful). SSH = salicylaldehyde salicylylhydrazone. SAH = salicylaldehyde acetylhydrazone.

At this lower temperature, the hydrazones appeared to have improved performance relative to PG.

### Example 14

Samples were pyrolysed in a fan oven at 130°C and analysed according to the General Procedure for the times indicated and with the results shown in Table 14:

**Table 14**

| Reference | PG % | Additive (%) | 3.5 hours |
|---|---|---|---|
| Ax | - | - | 2.36 (2) |
| Bx | 0.06 | - | 1.15 (4) |
| C | - | DOH (0.03) | 1.07 (3) |
| D | - | DAH (0.03) | 1.09 (2) |
| E | 0.06 | OH (0.04) | 0.66 (3) |
| F | 0.06 | SAH (0.03) | 0.82 (4) |
| G | 0.06 | SAZ (0.03) | 0.93 (2) |
| H | 0.06 | SSH (0.03) | 0.81 (3) |

DOH = 2,3-dihydroxybenzaldehyde oxalyldihydrazone. DAH = 2,3-dihydroxybenzaldehyde acetylhydrazone. OH = oxalyl dihydrazide. SAH = salicylaldehyde acetylhydrazone. SAZ = salicylaldehyde azine. SSH = salicylaldehyde salicylylhydrazone.

OH exhibited a stabilising effect, and retained its colour well, although gassing was evident. SAH provided the greatest retention of viscosity. OH, SAH, SAZ and SSH appeared to be acting synergistically with PG.

### Example 15

Samples were pyrolysed in a fan oven at 130°C and analysed according to the General Procedure for the times indicated and with the results shown in Table 15:

**Table 15**

| Reference | PG % | Additive (%) | 3.6 hours |
|---|---|---|---|
| Solvent 1 | | | |
| Ax | - | - | 2.29 (2) |
| Bx | 0.06 | - | 1.05 (2) |
| C | 0.06 | SAH (0.03) | 0.68 (2) |
| D | 0.06 | OH (0.03) | 0.63 (1) |
| | | | |
| Solvent 2 | | | |
| Ex | 0.06 | - | 0.79 (4) |
| F | - | SAH (0.03) | 0.64 (4) |
| G | - | SPH (0.03) | 1.25 (2) |
| H | - | HAH (0.03) | 0.68 (3) |
| I | - | OVOH (0.03) | 0.65 (4) |

SAH = salicylaldehyde acetylhydrazone. OH = oxalyl dihydrazide. SPH = reaction product of salicylaldehyde hydrazone and pivaloyl chloride (which was bright yellow, and of doubtful purity). HAH = 2-hydroxyacetophenone acetylhydrazone. OVOH = orthovanillin acetylhydrazone.

Different samples of NMMO were used for samples Ax-D and Ex-I, which were pyrolysed together. The pivaloyl group in SPH is an example of a substituted alkyl group.

### Example 16

Samples were pyrolysed in a fan oven at 112°C and analysed according to the General Procedure for the times indicated and with the results shown in Table 16:

**Table 16**

| Reference | PG % | Additive (%) | 16 hours |
|---|---|---|---|
| Ax | - | - | 2.7 (1) |
| Bx | - | IVAH (0.03) | 2.6 (1) |
| C | - | SAH (0.015) | 0.66 (2) |
| D | - | SAH (0.03) | 0.57 (2) |
| E | - | SAH (0.07) | 0.62 (2) |

IVAH = isovanillin acetylhydrazone. SAH = salicylaldehyde acetylhydrazone.

IVAH exhibited no stabilising effect. SAH was effective even at a concentration of 0.015%.

Dopes of the same compositions were also pyrolysed for 3.5 hours at 130°C. Those containing 0.015% and 0.03% SAH exhibited a similar degree of stabilisation, but that containing 0.07% appeared to be about 20% better.

### Example 17

Samples were pyrolysed in a fan oven at 132°C and analysed according to the General Procedure for the times indicated and with the results shown in Table 17:

**Table 17**

| Reference | PG % | Additive (%) | 3 hours | 4 hours |
|---|---|---|---|---|
| Ax | - | - | 2.04 (1) | - |
| Bx | 0.06 | - | 1.13 (2) | 2.05 (1) |
| C | - | SAH (0.005) | 1.03 (2) | 1.95 (2) |
| D | - | SAH (0.015) | - | 1.15 (2) |
| E | - | SAH (0.03) | 0.69 (2) | 1.09 (2) |
| F | - | SAH (0.07) | - | 0.99 (2) |
| G | - | PAH (0.03) | 0.87 (2) | - |
| H | - | SFH (0.03) | 0.77 (2) | - |

SAH = salicylaldehyde acetylhydrazone. PAH = pyridoxal acetylhydrazone. SFH = salicylaldehyde formylhydrazone.

Under these conditions, SAH appears to be ten times as efficient as PG in terms of concentration for the same performance, and twice as efficient in terms of the maximum stabilisation available. PAH gave a yellow dope with green fluorescence, but the colour was discharged on coagulation of cellulose.

### Example 18

Samples were pyrolysed in a fan oven at 132°C and analysed according to the General Procedure for the times indicated and with the results shown in Table 18:

**Table 18**

| Reference | PG % | Additive (%) | 5 hours | 6.5 hours |
|---|---|---|---|---|
| Ax | 0.06 | - | 3.50 (3) | 5.14 (3) |
| B | - | SAH (0.03) | 1.97 (2) | 3.83 (2) |
| C | - | SAH (0.005) | - | 5.07 (3) |
| D | - | DOH (0.03) | 2.63 (2) | 4.71 (2) |
| E | 0.06 | SSH (0.03) | 2.07 (2) | 3.56 (2) |

SAH = salicylaldehyde acetylhydrazone. DOH = 2,3-dihydroxybenzaldehyde oxalyldihydrazone. SSH = salicylaldehyde salicylhydrazone.

The performance of the hydrazones appears to tend towards that of PG at longer pyrolysis times. There is some evidence of synergy between PG and SSH.

### Example 19

Samples were pyrolysed in a fan oven at 132°C and analysed according to the General Procedure for the times indicated and with the results shown in Table 19

**Table 19**

| Reference | PG % | Additive (%) | 2.5 hr | 4 hr | 5.5 hr |
|---|---|---|---|---|---|
| Ax | 0.05 | TA (0.31) | - | 2.11 | 4.03 |
| Bx | 0.05 | - | 1.03 | 1.95 | 4.21 |
| Cx | 0.05 | TED (0.27) | - | 1.83 | 3.39 |
| D | - | SAH+TA (0.05+0.31) | - | 1.96 | 4.00 |
| E | - | SAH (0.05) | 0.73 | 1.53 | 3.54 |
| F | - | SAH+TED (0.05+0.27) | - | 1.62 | 2.98 |

SAH = salicylaldehyde acetylhydrazone. TA = tartaric acid. TED = triethylenediamine.

The acidified dopes were all slightly paler in colour than the others, and remained so throughout the pyrolysis. It will be observed that the stabilisation performance of SAH appeared to increase with increasing alkalinity over the range tested.

### Example 20

Samples were pyrolysed in a fan oven at 112°C and analysed according to the General Procedure for the times indicated and with the results shown in Table 20:

**Table 20**

| Reference | PG % | Additive (%) | 20 hr | 38 hr |
|---|---|---|---|---|
| Ax | 0.05 | - | 1.75 | 4.18 |
| B | - | SAH (0.05) | 1.34 | 2.74 |
| C | 0.02 | SAH+TU (0.03+0.10) | 1.43 | 2.27 |

SAH = salicylaldehyde acetylhydrazone. TU = thiourea.

Samples B and C both exhibited good long-term performance in comparison with sample Ax.

## Claims

1. A method for the manufacture of a solution of a polysaccharide in an aqueous tertiary amine N-oxide solvent, characterised in that it includes the step of dissolving in the solution or solvent at least one compound selected from the group consisting of (A) compounds of the formula ArCR¹=NNR²R³, wherein Ar represents an aromatic group which comprises an aromatic ring having six pi-electrons and substituted by a hydroxy group in the ortho position, optionally further substituted on the aromatic ring; R¹ represents hydrogen or C₁₋₄ n-alkyl; R² represents hydrogen, C₁₋₄ alkyl or C₆₋₁₀ aryl; and R³ represents hydrogen, C₁₋₄ alkyl, C₆₋₁₀ aryl, or R⁴CO, where R⁴ represents hydrogen, C₁₋₄ alkyl, C₆₋₁₀ aryl, XCONR²NH₂ or XCONR²N=CR¹Ar, where X represents a chemical bond, a C₁₋₄ alkylene group, a C₂₋₄ alkylidene group or a C₆₋₁₀ arylene group; or R² and R³ together represent ArCR¹; (B) one or more precursors which are capable of reacting in the solution to form such a compound (A) ; and (C) compounds of the formula R⁵CONR¹NH_{2,} wherein R⁵ represents hydrogen, C₁₋₄ alkyl, C₆₋₁₀ aryl or XCONR¹NH₂ and R¹ has the above meaning.

2. A method according to claim 1, further characterised in that the compound is a compound (A) wherein the group Ar is 2-hydroxyphenyl or one or more precursors thereof.

3. A method according to either of claims 1 and 2, further characterised in that R¹ is selected from the group consisting of hydrogen and methyl.

4. A method according to any preceding claim, further characterised in that the compound is a compound (A) wherein R² represents hydrogen or one or more precursors thereof.

5. A method according to any preceding claim, further characterised in that the compound is a compound (A) wherein R³ represents R⁴CO or one or more precursors thereof.

6. A method according to claim 5, further characterised in that R⁴ is selected from the group consisting of methyl and XCONR²N=CR¹Ar.

7. A method according to any one of claims 1 to 3, further characterised in that the compound is a compound (A) wherein R² and R³ together represent ArCR¹ or one or more precursors thereof.

8. A method according to any preceding claim, further characterised in that the solution contains from 0.005 to 0.5 percent by weight of the compound or compounds (A), (B) and/or (C).

9. A method according to any preceding claim, further characterised in that in the solvent or solution is dissolved (i) at least one compound of the formula ArCR¹O and at least one compound of the formula NH₂NR²R³, and/or (ii) at least one compound of the formula ArCR¹NNH₂ and at least one compound of the formula R⁴COY, wherein Y represents a leaving group, and/or (iii) the addition product of at least one compound of the formula ArCR¹O and at least one compound of the formula NH₂NR²R³.

10. A method according to claim 9, further characterised in that in the solution is dissolved salicylaldehyde and acetyl hydrazide.

11. A method according to any preceding claim, further characterised in that in the solution is additionally dissolved an organic compound which comprises a C=C-C=C grouping bearing at least two groups selected from the group consisting of hydroxyl groups and of amino groups containing at least one hydrogen atom.

12. A method according to any preceding claim, further characterised in that the polysaccharide is cellulose.

13. A method according to claim 12, further characterised in that the concentration of cellulose in the solution is in the range from 5 to 30 percent, preferably from 15 to 20 percent, by weight.

14. A method according to any preceding claim, further characterised in that the tertiary amine N-oxide is N-methylmorpholine N-oxide.

15. A method according to claim 14, further characterised in that the concentration of water in the aqueous solution is in the range from 5 to 20 percent.

16. A method for the manufacture of an extruded lyocell member which includes the steps of:
(1) dissolving a polysaccharide in an aqueous tertiary amine N-oxide solvent to form a solution;
(2) extruding the solution through a die by way of a gaseous gap into an aqueous coagulating bath to form a coagulated member;
(3) washing the coagulated member to remove residual tertiary amine N-oxide therefrom; and
(4) drying the coagulated member,
characterised in that the solution is manufactured by the method of any preceding claim.
